# EUROPÄISCHE PATENTSCHRIFT

(11) **EP 1 308 319 B1**
(45) Veröffentlichungstag und Bekanntmachung des Hinweises auf die Patenterteilung: **22.07.2009**
(21) Anmeldenummer: 01126203.7
(22) Anmeldetag: 05.11.2001
(51) Int. Cl.: B60C 11/18, B60C 19/00, B60C 1/00

(54) **Fahrzeugluftreifen**
Pneumatic tire
Bandage pneumatique

(43) Veröffentlichungstag der Anmeldung: 07.05.2003
(73) Patentinhaber: Continental Aktiengesellschaft, 30165 Hannover (DE)
(72) Erfinder: Hindriks, Günter, 49828 Georgsdorf (DE); Kaiser, Hinnerk, 30659 Hannover (DE); Kleinhoff, Klaus, 31552 Rodenberg (DE)

(56) Entgegenhaltungen:
- DE-A- 3 829 943
- DE-A- 4 030 779
- GB-A- 1 588 575
- US-A1- 2001 031 795

## Beschreibung

Die Erfindung betrifft einen Fahrzeugluftreifen in Radialbauart, insbesondere für den Einsatz unter winterlichen Fahrbedingungen, mit einem Laufstreifen, welcher eine die Lauffläche aufweisende Cap und insbesondere auch eine Base aufweist, wobei die Cap aus mindestens zwei sich in ihrer Mischungszusammensetzung unterscheidenden Cap-Bereichen besteht, wobei der die Außenschulter des Laufstreifens umfassende Cap-Bereich aus einer Mischung mit einer höheren Glasübergangstemperatur besteht als der die Innenschulter umfassende Cap-Bereich des Laufstreifens.

Ein derartiger Fahrzeugluftreifen ist aus der GB-A-1 588 575 bekannt. Dieser Fahrzeugluftreifen weist einen Laufstreifen auf, welcher aus zwei Abschnitten aus unterschiedlichen Kautschukmischungen besteht, wobei der eine Abschnitt die Außenschulter des Laufstreifens umfasst und aus einer Mischung mit einer höheren Glasübergangstemperatur besteht als der zweite Abschnitt, welcher die Innenschulter umfasst. Auf diese Weise ist der die Innenschulter umfassende Laufstreifenabschnitt derart ausgelegt, dass er eine gute Haftung auf schneeigem oder eisigem Untergrund aufweist, der die Außenschulter umfassende ist hinsichtlich der Hafteigenschaften auf trockenem oder nassem Untergrund verbessert.

In der EP-B-0 686 515 geht es darum, die Lebensdauer von Reifen für Sattelauflieger oder Anhänger mit ungelenkten Mehrachsaggregaten, insbesondere auf der hinteren Achse, zu erhöhen, indem ein fahrzeugäußerer Streifen, der eine Breite zwischen 20% und 25% der gesamten Aufstandsflächenbreite aufweist, aus einem Gummimaterial besteht, dass gemäß DIN 53518 höchstens 70% des Abriebvolumens zeigt wie das andere Gummimaterial, aus dem der übrige Bereich der Lauffläche besteht.

Entgegen der Lehre dieses europäischen Patentes soll bei dem aus der US-A-3,286,756 bekannten Reifen am fahrzeugäußeren Schulterbereich Gummimaterial höherer Rutschfestigkeit eingesetzt werden. Dabei soll dort ein höheres Gummi- Abriebsvolumen hingenommen werden. Auf der fahrzeuginneren Schulter und insbesondere im Laufflächenmittelbereich soll entsprechend eine abbriebsbeständigere Qualität unter Hinnahme einer geringeren Rutschfestigkeit eingesetzt werden.

Fahrzeugreifen, die für den Einsatz unter winterlichen Fahrbedingungen, wie schnee- oder eisbedeckten Fahrbahnen, besonders gut geeignet sein sollen, werden üblicherweise einheitlich aus so genannten Winterlaufstreifenmischungen, die eine niedrige Glasübergangstemperatur Tg aufweisen, hergestellt und weisen eine Profilausgestaltung mit einer Vielzahl von biegeweichen Profilelementen auf. Damit lassen sich die Fahreigenschaften, wie das Traktions- und das Bremsverhalten des Reifens auf winterlichen Fahrbahnen verbessern und optimieren. Unter trockenen Fahrbedingungen, demnach auf trockenen Fahrbahnen, weisen diese Reifen oft ein unpräzises Handlingsverhalten sowie eher schlechte Nässeeigenschaften auf. Dies ist insbesondere auf die niedrige Glasübergangstemperatur der Laufstreifenmischung zurückzuführen, wobei vor allem der Nassgriff beim Bremsen leidet. Der nach dem Stand der Technik zwischen der Winterperformance und der Nässeperformance eines Reifens bestehende Zielkonflikt - eine Verbesserung der einen Eigenschaften ist zwangsweise mit einer Verschlechterung der anderen Eigenschaften verbunden - soll mit Hilfe dieser Erfindung gelöst werden.

Diese Aufgabe wird erfindungsgemäß dadurch gelöst, dass die Mischung für den die Außenschulter umfassenden Cap-Bereich Kieselsäure in einem Anteil von 70 bis 100 Gewichtsteilen, bezogen auf 100 Gewichtsteile Kautschuk in der Mischung, enthält und die Mischung für den die Innenschulter umfassenden Cap-Bereich Kieselsäure in einen Anteil von 20 bis 30 Gewichtsteilen, bezogen auf 100 Gewichtsteile Kautschuk in der Mischung, enthält.

Umfangreiche und systematische Versuche seitens der Anmelderin haben ergeben, dass, zumindest bei den am weitesten verbreiteten Kraftfahrzeugen, nämlich jenen, die einen negativen Sturz aufweisen, die Winterfahreigenschatten eines Reifens bevorzugt vom Fahrzeug inneren Bereich des Laufstreifens bestimmt werden und diesbezügliche Schwerpunkte in diesem Bereich gesetzt werden sollten. Diese Beobachtung kann durch ein Erklärungsmodell gestützt werden. Die Reibbeiwerte sind bei winterlichen Verhältnissen eher gering. Da auch die übertragbaren Kräfte eher gering sind, überlagern sie den Einfluss des Radsturzes noch nicht, im Gegensatz zu Bedingungen, wo hohe Reibbeiwerte auftreten. Darüber hinaus wird durch einen negativen Radsturz ein höherer Druck auf der Fahrzeug inneren Seite eines Reifens erzeugt. Dieser erhöhte Druck ermöglicht dem Reifenprofil eine effektivere Verzahnung in losen winterlichen Oberflächen, wie Schnee. Dieses Modell erklärt daher die festgestellte positive Wirkung von eher winterorientierten Laufstreifenmischungen mit einer niedrigen Glasübergangstemperatur speziell im Bereich der Fahrzeuginnnenseite des Laufstreifens sowie den positiven Einfluss einer erhöhten Anzahl von Griffkanten in Form von Einschnitten oder Profilblockkanten speziell auf der Fahrzeug inneren Seite. In den erwähnten Versuchen wurde ferner festgestellt, dass eine Verbesserung des Handlingsverhaltens auf nassen und trockenen Oberflächen vor allem durch eine Optimierung des Fahrzeug äußeren Bereichs eines Luftstreifens erzielt werden kann. Hier stellt ebenfalls die Laufstreifenmischung eine sehr bedeutende Einflussgröße dar. Die Verwendung einer Laufstreifenmischung mit einer höheren Glasübergangstemperatur, hoher Mischungssteifigkeit und einem höheren Anteil an Kieselsäure auf der Fahrzeug äußeren Seite kann somit das Nass- und Trockenverhalten des Reifens positiv beeinflussen. Da die Glasübergangstemperatur T_{g} der Mischung im Laufstreifen maßgeblich bestimmt, ob der Reifen besonders auf nassen Oberflächen oder auf winterlichen Fahrbahnen Vorteile aufweist, wird verständlich, dass die Erfindung beide Eigenschaftsbereiche eines Reifens deutlich beeinflussen und verbessern kann.

Für gute Eigenschaften des Reifens sowohl auf nassen als auch auf trockenen Fahrbahnen ist es fernen von Vorteil, wenn die Mischung für den die Außenschulter umfassenden Cap-Bereich Kieselsäure in einen Anteil von 70 bis 100 Gewichtsteilen, bezogen auf 100 Gewichtsteile Kautschuk in der Mischung, enthält und wenn die Mischung relativ wenig Ruß, insbesondere in einem Anteil von 10 bis 20 Gewichtsteilen, ebenfalls bezogen auf 100 Gewichtsteile Kautschuk in der Mischung, und die Mischung für den die Innenschulter umfassenden Cap-Bereich einen höheren Anteil an Ruß, im Bereich von vorzugsweise 55 bis 65 Gewichtsteilen, ebenfalls bezogen auf 100 Gewichtsteile Kautschuk in der Mischung, enthält.

Um die Laufstreifenmischung in dem die Außenschulter umfassenden Cap-Bereich hinsichtlich guter Nassgriffeigenschaften einzustellen, ist es von Vorteil, wenn diese Mischung eine Glasübergangstemperatur zwischen -40°C und +5°C, insbesondere zwischen -20°C und 0°C, aufweist.

Die Laufstreifenmischung in dem die Innenschutter umfassenden Cap-Bereich soll dem Laufstreifen des Reifens gute Wintereigenschaften verleihen. Hier ist daher von Vorteil, wenn diese Laufstreifenmischung eine Glasübergangstemperatur zwischen -70°C und -20°C, insbesondere zwischen -60°C und -40°C, aufweist.

Der die Außenschulter umfassende Cap-Bereich wird vorzugsweise aus einer Kautschuk- Mischung erstellt, deren Polymersystem zumindest ein Polymer aus der Gruppe BR, NR, oder SBR, insbesondere S-SBR, aufweist. Besonderes vorteilhafte Mischungen für diesen Cap-Bereich enthalten BR, NR und S-SBR, wobei der Anteil an BR zwischen 45 und 55 Gewichtsteilen, der Anteil an NR zwischen 5 und 25 Gewichtsteilen und der Anteil an S-SBR zwischen 25 und 35 Gewichtsteilen, jeweils bezogen auf 100 Gewichtsteile Kautschuk in der Mischung, beträgt.

Erfindungsgemäß ausgeführte Fahrzeugluftreifen können nun eine Cap aufweisen, die in zwei Cap-Bereiche geteilt ist, die vorzugsweise zumindest im Wesentliche gleich breit sind. Ein derart erfindungsgemäß ausgeführter Reifen lässt sich einfach herstellen.

Erfindungsgemäß ausgeführte Fahrzeugluftreifen können jedoch im Laufstreifen auch aus mehr als zwei, insbesondere 3 bis 5, Cap-Bereichen aus Mischungen mit unterschiedlichen Glasübergangstemperaturen bestehen, wobei diese Cap-Bereiche übereinstimmende und / oder unterschiedliche Breiten aufweisen können. Dies erlaubt eine gezielte Optimierung der Eigenschaften des Laufstreifens hinsichtlich Nass- und Trockenverhalten sowie Winterfahreigenschaften, wobei jedoch die Herstellung derart ausgeführter Reifen aufwändiger ist.

Bei einer bevorzugten Ausführungsform der Erfindung werden die Cap-Bereiche aus Kautschuk- Mischungen erstellt, deren Glasübergangstemperaturen, ausgehend von der Mischung in dem die Außenschulter umfassenden Cap-Bereich bis zu dem die Innenschulter umfassenden Cap-Bereich, schrittweise abnimmt.

Bei sehr schweren Fahrzeugen mit hohem Antriebsdrehmoment z. B. geben Versuchsergebnisse Hinweise darauf, dass der optimale Kompromiss zwischen Handlingeigenschaften und Wintergriff eher mit Hilfe eines Laufstreifenkonzeptes erzielt werden kann, bei dem in der Mitte des Laufstreifens eine Mischung mit einer niedrigen Glasübergangstemperatur T_{g} eingesetzt wird. Dies wird mit dem Einfluss des Fahrzeugregelsystems begründet. Die Hinterachse des Fahrzeuges wirkt stabilisierend; können nicht mehr genügend Seitenkräfte aufgebaut werden, bricht die Hinterachse aus. Dies ist entscheidend für die Auslegung der Regelsysteme bei heckgetriebenen Fahrzeugen, denn um immer genügend Seitenkraft zu gewährleisten, werden die Räder der Hinterachse bei heckgetriebenen Fahrzeugen schon bei vergleichsweise geringen Schlupfwerten abgeregelt. Hierdurch ist der Anteil der Profilverzahnung auf winterlichen Fahrbahnen im Vergleich zu Regelungen bei höheren Schlupfwerten bei frontgetriebenen Fahrzeugen herabgesetzt. Tatsächlich wirkt sich bei den heckgetriebenen Fahrzeugen eine höhere Lamellierung des Profils weniger auf die Traktionseigenschaften aus, statt dessen dominiert der Anteil der Mischung beim Anteil am Gesamtreibwert.
In der Handlingdisziplin wirkt sich die stärkere Aufweichung der Profile (durch weichere Mischungen oder viele Einschnitte) bei diesen schweren Fahrzeugen auf der Fahrzeug inneren Schulter bei einigen Disziplinen in der Handlingbeurteilung nachteilig aus.
Der beste Kompromiss in der Winter-Trocken-Schere wird bei diesen speziellen Bedingungen deshalb mit einer Laufstreifenkonzept erzielt, welches in der Mitte des Laufstreifens das Material mit niedrigerer Glasübergangstemperatur T_{g} und in den beiden Schulterbereichen nässe- und trockenoptimierte Laufstreifenmischungen mit höherer Glasübergangstemperatur T_{g} bereitstellt. Diese Variante stellt sogar wegen der Handlingeigenschaften einen besseren Gesamtkompromiss dar, als eine Variante mit einer gering lamellierten Innenschulter, einem höher lamellierten Mittenbereich und einer kaum lamellierten Außenschulter mit einer Mischungsverteilung von einer Mischung mit einer niedrigen Glasübergangstemperatur T_{g} auf ca. ¾ der Laufstreifenbreite auf der Fahrzeug inneren Seite und einer Mischung mit höherer Glasübergangstemperatur T_{g} auf der Fahrzeug äusseren Seite.

Sollen mehr die Winterfahreigenschaften eines Reifens im Vordergrund stehen, so ist es von Vorteil, wenn der die Innenschulter umfassende Cap-Bereich der breiteste sämtlicher Cap-Bereiche ist und insbesondere zwischen 30 und 60 % der Breite des Laufstreifens einnimmt.

Die Erfindung wird nachfolgend anhand der Zeichnung, die schematisch Ausführungsbeispiele der Erfindung darstellt, näher beschrieben. Dabei zeigen
Fig. 1 einen Querschnitt durch eine Ausführungsform eines erfindungsgemäßen Fahrzeugreifens im Bereich des Laufstreifens und
Fig. 2 eine zweite Ausführungsform der Erfindung, ebenfalls anhand eines Querschnitts im Bereich des Laufstreifens.

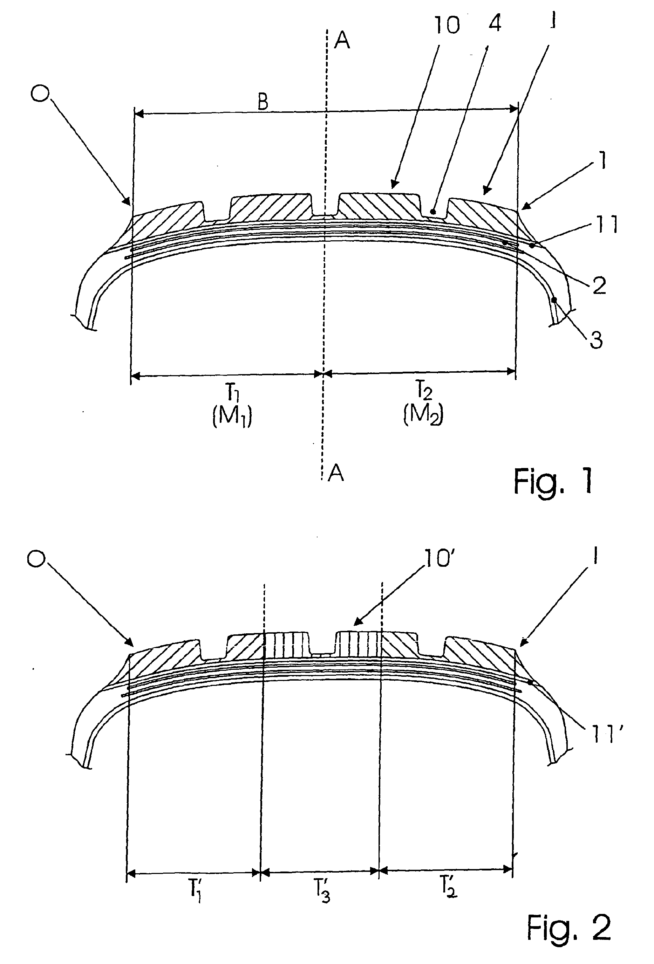

Die Schnittdarstellung gemäß Fig. 1 zeigt den Laufstreifenbereich eines Fahrzeugluftreifens, eines PKW- Radialreifens, mit einem aus einer Cap 10 und einer Base 11 bestehenden Laufstreifen 1, einem unterhalb des Laufstreifens 1 angeordneten, in der dargestellten Ausführungsform aus zwei Lagen bestehenden Gürtel 2 und einer Radialkarkasse 3. Der Gürtel 2, die Radialkarkasse 3 und die weiteren, nicht gezeigten Bauteile des Reifens können in an sich bekannter Weise ausgeführt sein. Der Laufstreifen 1 ist mit einer Profilierung versehen, die nicht Gegenstand dieser Erfindung ist und von welcher, lediglich aus illustrativen Gründen und beispielhaft, Umfangsnuten 4 angedeutet sind. Die strichlierte Linie A-A versinnbildlicht die den Reifen in zwei gleich große Teile teilende Äquatorebene, B bezeichnet die Laufstreifenbreite über jenen Bereich, welcher beim Abrollen des Reifens (unter den gemäß den E.T.R.T.O. Standards genormten Bedingungen) mit dem Untergrund in Kontakt tritt. Über die Breite B und ggf. seitlich geringfügig in die Seitenbereiche der Schultern reichend, ist die Cap 10 des Laufstreifens 1 vorgesehen, welche auf der wesentlich dünner ausgeführten Base 11 angeordnet ist. Die Base 11 kann aus einer der üblichen Base- Kautschukmischungen bestehen bzw. hergestellt sein, demnach aus einer, wie üblich, etwas härteren Mischung, die jedoch nicht Gegenstand dieser Erfindung ist.

Die durch die Linie A-A gekennzeichnete Äquatorebene teilt die Cap 10 des Laufstreifens 1 in einen in der Figur links der Linie A-A befindlichen Bereich T₁ und einen in der Figur rechts befindlichen Bereich T₂. Dabei ist mit O der im Fahrbetrieb und bei an einem Fahrzeug montierten Reifen außen befindliche Außenschulterbereich, mit I ist der im Fahrbetrieb des Reifens innen liegende Innenschulterbereich des Reifens bezeichnet. Der Cap-Bereich T₁ des Laufstreifens 1 umfasst somit die Außenschulter O, der Cap-Bereich T₂ die Innenschulter I.

Die für den Cap-Bereich T₁ gewählte Laufstreifenmischung M₁ unterscheidet sich gemäß der Erfindung von der für den Cap-Bereich T₂ gewählten Laufstreifenmischung M₂. Dabei wird im Cap-Bereich T₁, der die Außenschulter O umfasst, eine Laufstreifenmischung M₁ verwendet, die eine höhere Glasübergangstemperatur T_{g} aufweist als die Laufstreifenmischung M₂ im Cap-Bereich T₂, welcher die Innenschulter I umfasst. Die Mischung M₂ weist eine Glasübergangstemperatur T_{g} zwischen -70°C und -20°C, insbesondere zwischen -50°C und -30°C, auf, die Laufstreifenmischung M₁ weist eine Glasübergangstemperatur T_{g} zwischen -40°C und +5°C, insbesondere zwischen -20°C und 0°C, auf. Die Differenz der Glasübergangstemperaturen T_{g} der beiden Kautschukmischungen M₁ und M₂ sollte vorzugsweise zwischen 5 und 30°C betragen.

Die Glasübergangstemperatur T_{g} einer Mischung lässt sich insbesondere durch eine entsprechende Auswahl der Polymere, aber auch durch die Wahl des Weichmacheröls oder den Zusatz von Harzen beeinflussen bzw. bestimmen. Handelsübliche Typen von BR (Butadien- Kautschuk) haben eine Glasübergangstemperatur T_{g} in der Größenordnung von -95°C, Naturkautschuk in der Größenordnung von -60°C und SBR (Styrol- Butadien- Kautschuk) in der Größenordnung zwischen -95°C bis +100°C, abhängig vom jeweiligen Styrol- und Vinylgehalt, wobei SBR mit einer sehr hohen Glasübergangstemperatur T_{g} kein Vinyl sondern ausschließlich Styrol enthält. Was Weichmacheröle betrifft, so ist es bekannt, dass naphtenische Öle eine niedrigere Glasübergangstemperatur T_{g} bewirken und aromatische Öle die Glasübergangstemperatur T_{g} einer Mischung erhöhen. Von Harzen ist es bekannt, dass sie die Glasübergangstemperatur T_{g} einer Kautschukmischung ebenfalls erhöhen.

Nachstehend werden beispielhaft einige wichtige Bestandteile und deren bevorzugte Bereiche für ihre Anteile in der Mischung, jeweils bezogen auf 100 Gewichtsteile Kautschuk in der Mischung, für die Mischung M₁ des Cap-Bereiches T₁ angegeben sowie ein konkretes Beispiel für eine derartige Mischung (Beispiel 1). Das Polymersystem basiert auf BR (Butadien- Kautschuk), NR (Natur- Kautschuk) und S-SBR (Lösung- Styrol- Butadien- Kautschuk).

| **Bestandteil** | **Anteil** **(Gewichtsteile)** | **Beispiel 1** |
|---|---|---|
| BR | 45 - 55 | 50 |
| NR | 15 - 25 | 20 |
| S-SBR | 25 - 35 | 30 |
| Ruß | 4 - 25 | 14 |
| Kieselsäure | 70 - 100 | 85 |
| Aktivator | 5 - 7 | 6 |
| Mineralöl, aromatisch | 30 - 45 | 41 |

Im Folgenden werden ebenso für die Mischung M₂ des Cap-Bereiches T₂ bevorzugte Bereiche für Anteile einiger Hauptbestandteile und ein konkreteres Beispiel (Beispiel 2) angegeben. Auch diese Mischungsbeispiele basieren auf BR, NR und S-SBR.

| **Bestandteil** | **Anteil** **(Gewichtsteile)** | **Beispiel 2** |
|---|---|---|
| BR | 10-20 | 16 |
| NR | 60 - 70 | 66 |
| S-SBR | 12 - 25 | 18 |
| Ruß | 55 - 65 | 61 |
| Kieselsäure | 20 - 30 | 25 |
| Aktivator | 1 - 3 | 2 |
| Mineralöl, aromatisch | 50 - 55 | 51 |

Die Mischungen M₁ und M₂ für die Cap-Bereiche T₁ bzw. T₂ enthalten ferner die für Kautschuk- Mischungen für Laufstreifen üblichen weiteren Bestandteile, wie Weichmacher, Zinkoxid, Stearinäure, Beschleuniger und Schwefel, in den dafür üblichen Anteilen. Der Kieselsäureanteil wird insbesondere als mit dem Aktivator vermengtes Kieseläuregranulat beigegeben. Sowohl für die Mischung M₁ als auch die Mischung M₂ beträgt der bevorzugte Anteil aus Kieselsäure gemeinsam mit Ruß zwischen 70 und 110 Gewichtsteilen. An Stelle von S-SBR oder zusätzlich kann sowohl die Mischung M₁ als auch die Mischung M₂ Emulsion- SBR enthalten. Grundsätzlich gilt, dass sowohl die Mischung M₁ als auch die Mischung M₂ auf anderen Polymersystemen basieren können.

Die Grenze zwischen dem Cap-Bereich T₁ und dem Cap-Bereich T₂ muss nicht entlang der äquatorialen Ebene des Reifens, die in Fig.1 durch die Linie A-A gekennzeichnet ist, verlaufen. Sie kann zur Laufstreifeninnen- oder zur Laufstreifenaußenseite versetzt sein. Von besonderem Vorteil ist die Erfindung bei Reifen, deren Laufstreifen auch hinsichtlich der Profilgestaltung auf die Laufstreifenmischungen abgestimmt sind. In diesem Zusammenhang ist es von besonderem Vorteil, wenn im Cap-Bereich T₂, der die Innenschulter I umfasst, eine Winterprofilierung mit einer Vielzahl von Einschnitten und auch einer höheren Anzahl von Rillen und Nuten, die eine gewisse Biegeweichheit der Profilpositive bewirken, vorgesehen wird, und in dem die Außenschulter O umfassenden Cap-Bereich T₂ eine Profilierung mit einer geringeren Anzahl von schmalen Einschnitten, einer geringeren Anzahl von Blöcken und somit eher steifere Profilpositive vorgesehen wird.

Fig. 2 zeigt eine zweite Ausführungsform der Erfindung, bei der die Cap 10' des Laufstreifens 1' in drei über den Umfang des Reifens umlaufende Cap- Bereiche T₁', T₂', T₃' geteilt ist. Bei der dargestellten Ausführungsform ist jeder dieser Bereiche gleich breit gewählt und nimmt daher ein Drittel der Laufstreifenbreite B ein.

Der Cap-Bereich T₁' ist jener Bereich, welcher die Außenschulter O umfasst und ist daher gemäß der Erfindung aus einer Kautschukmischung erstellt, die eine Glasübergangstemperatur T_{g} im Bereich von -40°C bis +5°C aufweist. Der die Innenschulter I umfassende Cap-Bereich T₂' ist aus einer Kautschukmischung erstellt, deren Glasübergangstemperatur T_{g} erfindungsgemäß im Bereich zwischen -70°C und -20°C liegt. In jedem Fall ist auch bei dieser Ausführungsform die Glasübergangstemperatur T_{g} der Kautschukmischung des äußeren Cap-Bereiches T₁' höher als jene der Kautschukmischung des inneren Cap-Bereiches T₂'. Die Differenz beträgt vorzugsweise zwischen 5 und 30°C.

Die Kautschukmischung für den mittleren Cap-Bereich T₃' kann derart ausgeführt sein, dass ihre Glasübergangstemperatur T_{g} zwischen den beiden Werten der Glasübergangstemperaturen T_{g} für den äußeren Cap-Bereich T₁' und den inneren Cap-Bereich T₂' liegt.

Dabei kann aber auch vorgesehen werden, dass die Mischung im mittleren Cap-Bereich T₃' die kleinste oder die größte Glasübergangstemperatur T_{g} von sämtlichen Mischungen in der Cap 10' aufweist.

Bei weiteren, nicht dargestellten Ausführungsformen der Erfindung kann sich die Cap des Laufstreifens über ihren Umfang aus mehr als drei Laufstreifenbereichen mit unterschiedlichen Glasübergangstemperaturen zusammensetzen, wobei, die Mischung in dem die Außenschulter O umfassende Cap-Bereich eine höhere Glasübergangstemperatur T_{g} aufweist als die Mischung in dem die Innenschulter I umfassenden Cap-Bereich. Aus Gründen der Herstellung wird eine Teilung der Cap vorzugsweise in maximal fünf Laufstreifenbereiche unterschiedlicher Glasübergangstemperaturen T_{g} erfolgen. Die Breiten der unterschiedliche Glasübergangstemperaturen T_{g} aufweisenden Bereiche im Laufstreifen können übereinstimmen, müssen jedoch nicht.

Bevorzugt ist eine Ausführung, bei der in den einzelnen Cap-Bereichen Mischungen eingesetzt werden, bei welchen die Glasübergangstemperaturen von dem die Außenschulter umfassenden Cap-Bereich bis zu dem die Innenschulter umfassenden Cap-Bereich schrittweise abnimmt.

## Patentansprüche

1. Fahrzeugluftreifen in Radialbauart, insbesondere für den Einsatz unter winterlichen Fahrbedingungen, mit einem Laufstreifen (1, 1'), welcher eine die Lauffläche aufweisende Cap (10, 10') und insbesondere auch eine Base (11, 11') aufweist, wobei die Cap (10, 10') aus mindestens zwei sich in ihrer Mischungszusammensetzung unterscheidenden Cap-Bereichen besteht, wobei der die Außenschulter (O) des Laufstreifens (1,1') umfassende Cap-Bereich (T₁, T₁') aus einer Mischung mit einer höheren Glasübergangstemperatur besteht als der die Innenschulter (I) umfassende Cap-Bereich (T₂, T₂') des Laufstreifens (1, 1'),
**dadurch gekennzeichnet,**
**dass** die Mischung (M₁) für den die Außenschulter (O) umfassenden Cap-Bereich (T₁, T₁') Kieselsäure in einem Anteil von 70 bis 100 Gewichtsteilen, bezogen auf 100 Gewichtsteile Kautschuk in der Mischung, enthält und die Mischung (M₂) für den die Innenschulter (I) umfassenden Cap-Bereich (T₂, T₂') Kieselsäure in einen Anteil von 20 bis 30 Gewichtsteilen, bezogen auf 100 Gewichtsteile Kautschuk in der Mischung, enthält.

2. Fahrzeugluftreifen nach Anspruch 1, **dadurch gekennzeichnet, dass** die
Mischung (M₁) für den die Außenschulter (O) umfassenden Cap-Bereich (T₁, T₁') Ruß in einen Anteil von 4 bis 25 Gewichtsteilen, bezogen auf 100 Gewichtsteile Kautschuk in der Mischung, enthält.

3. Fahrzeugluftreifen nach Anspruch 1, **dadurch gekennzeichnet, dass** die
Mischung (M₂) für den die Innenschulter (I) umfassenden Cap-Bereich (T₂, T₂') Ruß in einen Anteil von 55 bis 65 Gewichtsteilen, bezogen auf 100 Gewichtsteile Kautschuk in der Mischung, enthält.

4. Fahrzeugluftreifen nach Anspruch 1 oder 2, **dadurch gekennzeichnet, dass** die Laufstreifenmischung (M₁) in dem die Außenschulter (O) umfassenden Cap-Bereich (T₁, T₁') eine Glasübergangstemperatur (T_{g}) zwischen -40°C und +5°C, insbesondere zwischen -20°C und O°C, aufweist.

5. Fahrzeugluftreifen nach Anspruch 1 oder 3, **dadurch gekennzeichnet, dass** die Laufstreifenmischung in dem die Innenschulter (I) umfassenden Cap-Bereich ('T₂, T₂') eine Glasübergangstemperatur (T_{g}) zwischen -70°C und -20°C, insbesondere zwischen -60°C und -40°C, aufweist.

6. Fahrzeugluftreifen nach einem der Ansprüche 1, 2 oder 4 **dadurch gekennzeichnet, dass** der die Außenschulter (O) umfassende Cap-Bereich (T₁, T₁') aus einer Kautschukmischung (M₁) besteht, deren Polymersystem zumindest ein Polymer aus der Gruppe BR, NR oder SBR, insbesondere S-SBR, aufweist.

7. Fahrzeugluftreifen nach Anspruch 6, **dadurch gekennzeichnet, dass** die Mischung (M₁) für den die Außenschulter umfassenden Cap-Bereich (T₁) auf BR, NR und S-SBR basiert, wobei der Anteil an BR zwischen 45 und 55 Gewichtsteilen, der Anteil der NR zwischen 5 und 25 Gewichtsteilen und der Anteil an S-SBR zwischen 25 und 35 Gewichtsteilen, jeweils bezogen auf 100 Gewichtsteile Kautschuk in der Mischung, beträgt.

8. Fahrzeugluftreifen nach einem der Ansprüche 1, 3 oder 5, **dadurch gekennzeichnet, dass** der die Innenschulter (I) umfassende Cap-Bereich (T₂, T₂') aus einer Kautschukmischung (M₂) besteht, deren Polymersystem zumindest ein Polymer aus der Gruppe BR, NR oder SBR, insbesondere S-SBR, aufweist.

9. Fahrzeugluftreifen nach Anspruch 8, **dadurch gekennzeichnet, dass** die Mischung (M₂) für den die Innenschulter (I) umfassenden Cap-Bereich (I₂) auf BR, NR und S-SBR basiert, wobei der Anteil von BR zwischen 10 und 20 Gewichtsteilen, der Anteil von NR zwischen 60 und 70 Gewichtsteilen und der Anteil von S-SBR zwischen 12 und 25 Gewichtsteilen, jeweils bezogen auf 100 Gewichtsteile Kautschuk in der Mischung, beträgt.

10. Fahrzeugluftreifen nach einem der Ansprüche 1 bis 9, **dadurch gekennzeichnet, dass** die Cap (10, 10') des Laufstreifens (1, 1') in zwei, vorzugsweise zumindest im Wesentlichen gleich breite, Cap-Bereiche (T₁, T₂) geteilt ist.

11. Fahrzeugluftreifen nach einem der Ansprüche 1 bis 10, **dadurch gekennzeichnet, dass** die Cap des Laufstreifens in drei bis fünf Cap-Bereiche (T₁', T₂', T₃') aus Mischungen unterschiedlicher Glasübergangstemperaturen geteilt ist, wobei die Cap-Bereiche insbesondere übereinstimmen breit sind.

12. Fahrzeugluftreifen nach einem der Ansprüche 1 bis 9 oder 11, **dadurch gekennzeichnet, dass** die Cap-Bereiche aus Kautschukmischungen bestehen, deren Glasübergangstemperaturen (T_{g}), ausgehend von der Mischung in dem die Außenschulter (O) umfassenden Cap-Bereich (T₁') bis zu dem die Innenschulter (I) umfassenden Cap-Bereich (T₂'), schrittweise abnimmt.

13. Fahrzeugluftreifen nach einem der Ansprüche 1 bis 9 oder 11, **dadurch gekennzeichnet, dass** im Mittelbereich des Laufstreifens ein Cap-Bereich (T_{3'}) vorgesehen ist, dessen Mischung die höchste Glasübergangstemperatur (T_{g}) aufweist.

14. Fahrzeugluftreifen nach einem der Ansprüche 1 bis 9 oder 11, **dadurch gekennzeichnet, dass** im Mittelbereich des Laufstreifens ein Cap-Bereich (T_{g}') vorgesehen ist, dessen Mischung die niedrigste Glasübergangstemperatur (T_{g}) aufweist.

15. Fahrzeugluftreifen nach einem der Ansprüche 1 bis 14, **dadurch**
**gekennzeichnet, dass** der die Innenschulter (I) umfassende Cap-Bereich der breiteste sämtlicher Cap-Bereiche ist.

16. Fahrzeugluftreifen nach Anspruch 15, **dadurch gekennzeichnet, dass** der die Innenschulter (I) umfassende Cap-Bereich zwischen 30 und 60% der Breite des Laufstreifens einnimmt.

## Claims

1. Pneumatic vehicle tyre of a radial type, in particular for use in winter driving conditions, with a tread rubber (1, 1'), which has a cap (10, 10') having a tread and in particular also has a base (11, 11'), the cap (10, 10') comprising at least two cap regions that are different in the composition of their mixture, the cap region (T₁, T₁') that encompasses the outer shoulder (O) of the tread rubber (1, 1') consisting of a mixture with a higher glass transition temperature than the cap region (T₂, T₂') of the tread rubber (1, 1') that encompasses the inner shoulder (I), **characterized in that** the mixture (M₁) for the cap region (T₁, T₁') that encompasses the outer shoulder (O) containing silica in a proportion of 70 to 100 parts by weight, with reference to 100 parts by weight of rubber in the mixture, and the mixture (M₂) for the cap region (T₂, T₂') that encompasses the inner shoulder (I) contains silica in a proportion of 20 to 30 parts by weight, with reference to 100 parts by weight of rubber in the mixture.

2. Pneumatic vehicle tyre according to Claim 1, **characterized in that** the mixture (M₁) for the cap region (T₁, T₁') that encompasses the outer shoulder (O) contains carbon black in a proportion of 4 to 25 parts by weight, with reference to 100 parts by weight of rubber in the mixture.

3. Pneumatic vehicle tyre according to Claim 1, **characterized in that** the mixture (M₂) for the cap region (T₂, T₂') that encompasses the inner shoulder (I) contains carbon black in a proportion of 55 to 65 parts by weight, with reference to 100 parts by weight of rubber in the mixture.

4. Pneumatic vehicle tyre according to Claim 1 or 2, **characterized in that** the tread rubber mixture (M₁) has in the cap region (T₁, T₁') that encompasses the outer shoulder (O) a glass transition temperature (Tg) between -40°C and +5°C, in particular between - 20°C and 0°C.

5. Pneumatic vehicle tyre according to Claim 1 or 3, **characterized in that** the tread rubber mixture has in the cap region (T₂, T₂') that encompasses the inner shoulder (I) a glass transition temperature (Tg) between -70°C and -20°C, in particular between -60°C and -40°C.

6. Pneumatic vehicle tyre according to one of Claims 1, 2 or 4, **characterized in that** the cap region (T₁, T₁') that encompasses the outer shoulder (O) consists of a rubber mixture (M₁) of which the polymer system has at least one polymer from the group BR, NR or SBR, in particular S-SBR.

7. Pneumatic vehicle tyre according to Claim 6, **characterized in that** the mixture (M₁) for the cap region (T₁) that encompasses the outer shoulder is based on BN, NR and S-SBR, the proportion of BR being between 45 and 55 parts by weight, the proportion of NR being between 5 and 25 parts by weight and the proportion of S-SBR being between 25 and 35 parts by weight, respectively with reference to 100 parts by weight of rubber in the mixture.

8. Pneumatic vehicle tyre according to one of Claims 1, 3 or 5, **characterized in that** the cap region (T₂, T₂') that comprises the inner shoulder (I) consists of a rubber mixture (M₂) of which the polymer system comprises at least one polymer from the group BR, NR or SBR, in particular S-SBR.

9. Pneumatic vehicle tyre according to Claim 8, **characterized in that** the mixture (M₂) for the cap region (I₂) that comprises the inner shoulder (I) is based on BR, NR and S-SBR, the proportion of BR being between 10 and 20 parts by weight, the proportion of NR being between 60 and 70 parts by weight and the proportion of S-SBR being between 12 and 25 parts by weight, respectively with reference to 100 parts by weight of rubber in the mixture.

10. Pneumatic vehicle tyre according to one of Claims 1 to 9, **characterized in that** the cap (10, 10') of the tread rubber (1, 1') is divided into two cap regions (T₁, T₂), preferably at least substantially of the same width.

11. Pneumatic vehicle tyre according to one of Claims 1 to 10, **characterized in that** the cap of the tread rubber is divided into three to five cap regions (T₁', T₂', T₃') of mixtures of different glass transition temperatures, the cap regions particularly coinciding in their width.

12. Pneumatic vehicle tyre according to one of Claims 1 to 9 or 11, **characterized in that** the cap regions consist of rubber mixtures of which the glass transition temperatures (Tg) decrease in steps, starting from the mixture in the cap region (T₁') that encompasses the outer shoulder (O) up to the cap region (T₂') that encompasses the inner shoulder (I).

13. Pneumatic vehicle tyre according to one of Claims 1 to 9 or 11, **characterized in that** a cap region (T₃') of which the mixture has the highest glass transition temperature (Tg) is provided in the central region of the tread rubber.

14. Pneumatic vehicle tyre according to one of Claims 1 to 9 or 11, **characterized in that** a cap region (T₃') of which the mixture has the lowest glass transition temperature (Tg) is provided in the central region of the tread rubber.

15. Pneumatic vehicle tyre according to one of Claims 1 to 14, **characterized in that** the cap region that encompasses the inner shoulder (I) is the widest of all the cap regions.

16. Pneumatic vehicle tyre according to Claim 15, **characterized in that** the cap region that encompasses the inner shoulder (I) accounts for between 30 and 60% of the width of the tread rubber.

## Revendications

1. Bandage pneumatique à structure radiale pour véhicule, en particulier destiné à être utilisé dans des conditions de conduite hivernales, muni d'une bande de roulement (1, 1') dotée d'un chapeau (10, 10') qui présente la surface de roulement et en particulier aussi d'une base (11, 11'), le chapeau (10, 10') étant constitué d'au moins deux parties de chapeau dont les compositions du mélange sont différentes, la partie (T₁, T₁') du chapeau qui comprend l'épaulement extérieur (O) de la bande de roulement (1, 1') étant constituée d'un mélange dont la température de transition vitreuse est plus élevée que celle de la partie (T₂, T₂') du chapeau qui comprend l'épaulement intérieur (I) de la bande de roulement (1, 1'),
**caractérisé en ce que**
le mélange (M₁) prévu pour la partie (T₁, T₁') du chapeau qui comprend l'épaulement extérieur (O) contient de l'acide silicique à raison de 70 à 100 parties en poids pour 100 parties en poids de caoutchouc dans le mélange et
**en ce que** le mélange (M₂) pour la partie (T₂, T₂') du chapeau qui comprend l'épaulement intérieur (I) contient de l'acide silicique à raison de 20 à 30 parties en poids pour 100 parties en poids de caoutchouc dans le mélange.

2. Bandage pneumatique pour véhicule selon la revendication 1, **caractérisé en ce que** le mélange (M₁) prévu pour la partie (T₁, T₁') du chapeau qui comprend l'épaulement extérieur (O) contient du noir de carbone à raison de 4 à 25 parties en poids pour 100 parties en poids de caoutchouc dans le mélange.

3. Bandage pneumatique pour véhicule selon la revendication 1, **caractérisé en ce que** le mélange (M₂) prévu pour la partie (T₂, T₂') du chapeau qui comprend l'épaulement intérieur (I) contient du noir de carbone à raison à 55 à 65 parties en poids pour 100 parties en poids de caoutchouc dans le mélange.

4. Bandage pneumatique pour véhicule selon les revendications 1 ou 2, **caractérisé en ce que** dans la partie (T₁, T'₁) qui comprend l'épaulement extérieur (O), le mélange (M₁) pour la bande de roulement présente une température de transition vitreuse (Tg) comprise entre -40°C et +5°C et en particulier entre -20°C et 0°C.

5. Bandage pneumatique pour véhicule selon la revendication 1 ou 3, **caractérisé en ce que** dans la partie (T₂, T₂') du chapeau qui comprend l'épaulement intérieur (I), le mélange pour la bande de roulement présente une température de transition vitreuse (T_{g}) comprise entre -70°C et -20°C et en particulier entre -60°C et -40°C.

6. Bandage pneumatique pour véhicule selon l'une des revendications 1, 2 ou 4, **caractérisé en ce que** la partie (T₁, T₁') du chapeau qui comprend l'épaulement extérieur (O) est constituée d'un mélange de caoutchouc (M₁) dont le système polymère présente au moins un polymère sélectionné dans l'ensemble constitué de BR, NR ou SBR et en particulier du S-SBR.

7. Bandage pneumatique pour véhicule selon la revendication 6, **caractérisé en ce que** le mélange (M₁) prévu pour la partie (T₁) du chapeau qui comprend l'épaulement extérieur est à base de BR, NR et S-SBR, la proportion de BR étant comprise entre 45 et 55 parties en poids, la proportion de NR entre 5 et 25 parties en poids et la proportion de S-SBR entre 25 et 35 parties en poids, chaque fois par rapport à 100 parties en poids du caoutchouc dans le mélange.

8. Bandage pneumatique pour véhicule selon l'une des revendications 1, 3 ou 5, **caractérisé en ce que** la partie (T₂, T₂') du chapeau qui comprend l'épaulement intérieur (I) est constituée d'un mélange de caoutchouc (M₂) dont le système polymère présente au moins un polymère sélectionné dans l'ensemble constitué de BR, NR ou SBR et en particulier du S-SBR.

9. Bandage pneumatique pour véhicule selon la revendication 8, **caractérisé en ce que** le mélange (M₂) prévu pour la partie (I₂) du chapeau qui comprend l'épaulement intérieur (I) est à base de BR, de NR et de S-SBR, la proportion de BR étant comprise entre 10 et 20 parties en poids, la proportion de NR entre 60 et 70 parties en poids et la proportion de S-SBR entre 12 et 25 parties en poids, chaque fois par rapport à 100 parties en poids de caoutchouc dans le mélange.

10. Bandage pneumatique pour véhicule selon l'une des revendications 1 à 9, **caractérisé en ce que** le chapeau (10, 10') de la bande de roulement (1, 1') est divisé en deux parties de chapeau (T₁, T₂), de préférence de largeur au moins essentiellement identique.

11. Bandage pneumatique pour véhicule selon l'une des revendications 1 à 10, **caractérisé en ce que** le chapeau de la bande de roulement est divisé en trois à cinq parties de chapeau (T₁', T₂', T₃') constituées de mélanges dont les températures de transition vitreuse sont différentes, les parties de chapeau ayant des largeurs en particulier correspondantes.

12. Bandage pneumatique pour véhicule selon l'une des revendications 1 à 9 ou 11, **caractérisé en ce que** les parties du chapeau sont constituées de mélanges de caoutchouc dont les températures de transition vitreuse (T_{g}) diminuent par paliers entre le mélange de la partie (T₁') du chapeau qui comprend l'épaulement extérieur (O) et celui de la partie (T₂') du chapeau qui comprend l'épaulement intérieur (I).

13. Bandage pneumatique pour véhicule selon l'une des revendications 1 à 9 ou 11, **caractérisé en ce qu'**une partie (T₃') de chapeau dont le mélange présente la plus haute température de transition vitreuse (Tg) est prévue dans la partie centrale de la bande de roulement.

14. Bandage pneumatique pour véhicule selon l'une des revendications 1 à 9 ou 11, **caractérisé en ce qu'**une partie (T₃') de chapeau dont le mélange présente la plus basse température de transition vitreuse (Tg) est prévue dans la partie centrale de la bande de roulement.

15. Bandage pneumatique pour véhicule selon l'une des revendications 1 à 14, **caractérisé en ce que** la partie de chapeau qui comprend l'épaulement intérieur (I) est la plus large de toutes les parties du chapeau.

16. Bandage pneumatique selon la revendication 15, **caractérisé en ce que** la partie de chapeau qui comprend l'épaulement intérieur (I) occupe de 30 à 60% de la largeur de la bande de roulement.
